# EUROPÄISCHE PATENTANMELDUNG

(11) **EP 0 589 144 A1**
(43) Veröffentlichungstag der Anmeldung: **30.03.1994**
(21) Anmeldenummer: 93108060.0
(22) Anmeldetag: 18.05.1993
(51) Int. Cl.: F16B 19/10

(54) **Nietverbindung**

(30) Priorität: 26.03.1993 DE 9304575 U; 23.09.1992 DE 9212697 U
(71) Anmelder: GESELLSCHAFT FÜR BEFESTIGUNGSTECHNIK GEBR. TITGEMEYER GmbH & CO. KG., W-4500 Osnabrück (DE)
(72) Erfinder: Titgemeyer, Manfred, 4500 Osnabrück (DE)
(74) Vertreter: Busse & Busse Patentanwälte

(57) **Zusammenfassung**

Die Erfindung bezieht sich auf eine Nietverbindung 1 mit einer unter Zwischenlage eines Dichtelementes 9 an einem Werkstück 8 festlegbaren Blindniet 3, vorzugsweise einer ein Innengewinde 2 aufweisenden Blind-Einnietmutter, dessen Nietschaft 6 eine in dem Werkstück 8 vorgesehene Lochung 7 durchgreift und dessen Nietkopf 4 mit seinem Nietkopfkragen 5 an dem an die Lochung 7 angrenzenden Werkstückbereich festlegbar ist, insbesondere zur Befestigung von Scharnieren von Kofferraumdeckeln an der Karosserie eines Kraftfahrzeuges. Der Nietkopf 4 hat einen Nietkopfkragen 5 mit einer zum Werkstück 8 hin offenen Formausnehmung 10 zur Anordnung des Dichtelementes 9.

## Beschreibung

Die Erfindung bezieht sich auf eine Nietverbindung mit einer unter Zwischenlage eines Dichtelementes an einem Werkstück festlegbaren Blindniet, vorzugsweise einer ein Innengewinde aufweisenden Blind-Einnietmutter, dessen Nietschaft eine in dem Werkstück vorgesehene Lochung durchgreift und dessen Nietkopf mit seinem Nietkopfkragen an dem an die Lochung angrenzenden Werkstückbereich festlegbar ist, insbesondere zur Befestigung von Scharnieren von Kofferraumdeckeln an der Karosserie eines Kraftfahrzeuges.

Nietverbindungen herkömmlicher Bauart haben einen plan an dem Werkstück anlegbaren Nietkopfkragen. Sind Bauteile wie beispielsweise Kofferraumdeckel von Kraftfahrzeugen über Scharniere an der Karosserie eines Kraftfahrzeuges abgedichtet zu haltern, kann mittels dieser herkömmlichen Nietbefestigungen das Eindringen von Feuchtigkeit trotz eines zwischengelegten Dichtelementes insbesondere aufgrund der vorherrschenden Unterdrücke innerhalb des geschlossenen Kofferraumes bei Kraftfahrzeugen nicht verhindert werden.

Es ist daher Aufgabe der vorliegenden Erfindung, eine Nietbefestigung der eingangs genannten Art mit baulich einfachen Mitteln zu schaffen, mit der Bauteile sicher abgedichtet aneinander festzulegen sind.

Zur Lösung dieser Aufgabe zeichnet sich die Nietverbindung der eingangs genannten Art dadurch aus, daß der Nietkopf einen Nietkopfkragen mit einer zum Werkstück hin offenen Formausnehmung zur Anordnung des Dichtelements hat.

Mit der Nietverbindung nach der Erfindung ist ein Bauteil absolut dicht an einem Werkstück zu befestigen. Beim Befestigen der Teile kann das Dichtelement in die Formausnehmung und ggf. auch noch leicht in angrenzende Bereiche eindringen, wobei der äußere Rand des Nietkopfkragens am Werkstück abgedichtet nach außen hin anliegt. Bevorzugt ist die Formausnehmung durch eine zum Nietschaft hin abnehmende Nietkopfkragenhöhe gebildet, wobei aufgrund der geometrischen Gestaltung während des Befestigungsvorganges des Nietes auf die zwischengelegte Dichtung eine Kraft ausgeübt wird, die das Dichtelement daran hindert, über den Außenrand des Nietkopfes hin zu zerfließen, gleichfalls jedoch auch das Dichtelement in den Spalt zwischen Nietschaft und Lochungsaußendurchmesser treibt. Damit ist eine absolute Dichtheit der Nietverbindung ohne zusätzliche Maßnahmen zu vollziehen.

Zweckmäßigerweise verkleinert sich die Nietkopfkragenhöhe zum Nietschaft hin stetig, was durch eine schräg zulaufende oder leicht gewölbt verlaufende Kontur der Nietkopfkrageninnenfläche erfolgen kann.

Weitere Ausgestaltungen der Erfindung ergeben sich aus den Unteransprüchen.

Zur weiteren Erläuterung der Erfindung wird auf die nachfolgende Beschreibung und die Zeichnung verwiesen. In der Zeichnung zeigen:
- Fig. 1: eine schematische Querschnittsdarstellung eines Ausführungsbeispiels der Nietverbindung nach der Erfindung;
- Fig. 2: vergrößert ausschnittsweise die Einzelschnittdarstellung II in Fig. 1., und
- Fig. 3: eine schematische Querschnittsdarstellung eines alternativen Ausführungsbeispiels.

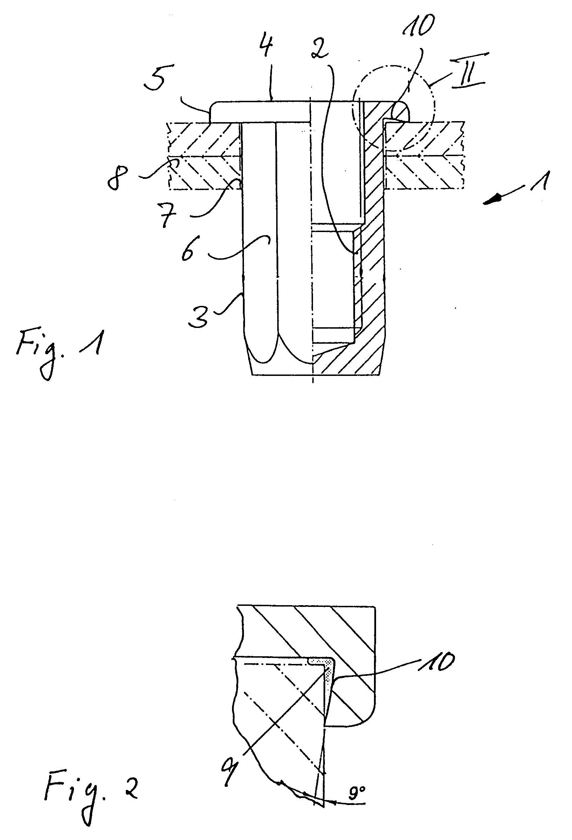

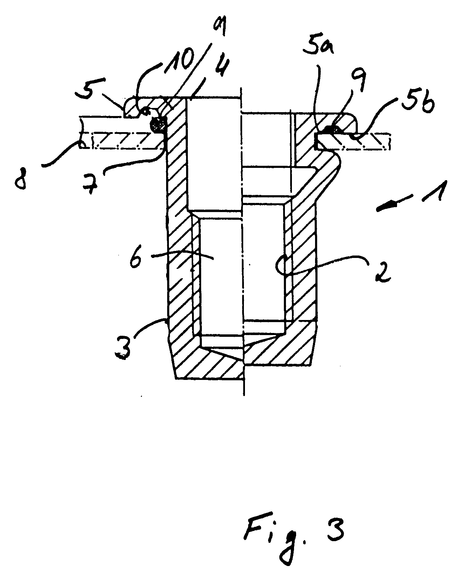

Die in der Zeichnung allgemein mit 1 bezifferte Nietverbindung hat eine mit einem Innengewinde 2 versehene Blind-Einnietmutter 3, die in herkömmlicher Weise einen Nietkopf 4 mit einem Nietkopfkragen 5 aufweist. Die Blind-Einnietmutter ist mit ihrem Nietschaft 6 in die Lochung 7 eines Werkstückes 8 einzuführen. Der Nietkopfkragen 5 des Nietkopfes 4 hat eine zu seinem Außenrand hin leicht gewölbt verlaufende, abnehmende Kragenhöhe (Fig. 2), wobei der leicht geneigte Wölbungswinkel im gezeigten Ausführungsbeispiel 9° beträgt. Die Wölbung ist dabei derart gewählt, daß im montierten Zustand der Außenrand an dem Werkstück trotz der zwischengelegten Dichtung 9, die im gezeigten Ausführungsbeispiel ein handelsüblicher O-Ring ist, anliegt, trotzdem jedoch eine Formausnehmung 10 zur Anordnung dieses Dichtelementes derart beschaffen ist, daß bei Befestigung der Blind-Einnietmutter eine Kraft auf die dazwischengelegte Dichtung 9 ausgeübt wird, die die Dichtung 9 in den Zwischenraum zwischen Außendurchmesser der Lochung 7 des Werkstückes 8 und Außendurchmesser des Nietschaftes 6 der Blind-Einnietmutter treibt.

In Fig. 3 ist ein alternatives Ausführungsbeispiel der Nietverbindung nach der Erfindung dargestellt. Hierbei ist in dem Nietkopfkragen eine im Querschnitt im wesentlichen rinnenförmige Formausnehmung (10) vorgesehen, und zwar derart, daß zum Nietschaft (3) hin ein innerer, ebener Nietkopfkragenrand (5a) und ein äußerer ebener Nietkopfkragenrand (5b) verbleibt.

Wie in Fig. 3 links veranschaulicht, ist das Dichtelement (9) vor der Befestigung am inneren Nietkopfkragenrand (5a) gelegen und wird durch den Befestigungsvorgang in die Formausnehmung (10) getrieben. Danach liegt der Nietkopfkragenrand (5b) an dem Werkstück (8) an womit eine absolut dichte Verbindung zu vollziehen ist. Damit ist auch wirksam Korrosionserscheinungen an Werkstücken vorzubeugen.

## Patentansprüche

1. Nietverbindung (1) mit einer unter Zwischenlage eines Dichtelementes (9) an einem Werkstück (8) festlegbaren Blindniet (3), vorzugsweise einer ein Innengewinde (2) aufweisenden Blind-Einnietmutter, dessen Nietschaft (6) eine in dem Werkstück (8) vorgesehene Lochung (7) durchgreift und dessen Nietkopf (4) mit seinem Nietkopfkragen (5) an dem an die Lochung (7) angrenzenden Werkstückbereich festlegbar ist, insbesondere zur Befestigung von Scharnieren von Kofferraumdeckeln an der Karosserie eines Kraftfahrzeuges, **dadurch gekennzeichnet**, daß der Nietkopf (4) einen Nietkopfkragen (5) mit einer zum Werkstück (8) hin offenen Formausnehmung (10) zur Anordnung des Dichtelementes (9) hat.

2. Nietverbindung nach Anspruch 1, **dadurch gekennzeichnet**, daß der Nietkopf (4) einen Nietkopfkragen (5) mit einer von seinem Außenrand zum Nietschaft (6) hin abnehmenden Nietkopfkragenhöhe hat und sich die Formausnehmung (10) von der Höhe her zum Nietschaft sich vergrößert.

3. Nietverbindung nach Anspruch 1 oder 2, **dadurch gekennzeichnet**, daß sich die Nietkopfkragenhöhe zum Nietschaft (6) hin stetig verkleinert.

4. Nietverbindung nach einem der Ansprüche 1 bis 3, **dadurch gekennzeichnet**, daß der Nietkopfkragen (5) in seinem im montierten Zustand dem Werkstück (8)zugewandten Bereich gewölbt oder schräg zulaufend ausgebildet ist.

5. Nietverbindung nach Anspruch 4, **dadurch gekennzeichnet**, daß zur Horizontalen hin der Wölbungs- oder Neigungswinkel in etwa 9° beträgt.

6. Nietverbindung nach einem der Ansprüche 1 bis 5, **dadurch gekennzeichnet**, daß als Dichtelement (9) ein O-Ring vorgesehen ist.

7. Nietverbindung nach Anspruch 1**, dadurch gekenn****zeichnet**, daß der Nietkopfkragen (5) einen inneren und äußeren ebenen Nietkopfkragenrand (5a,5b) als Werkstückanlagefläche hat und die Formausnehmung (10) in diese Nietkopfkragenränder (5a,5b) mündet.

8. Nietverbindung nach Anspruch 7, **dadurch gekennzeichnet**, daß die Formausnehmung (10) eine Querschnittsgestalt mit schräg zu den Nietkopfkragenrändern (5a,5b) verlaufenden Seitenwänden hat.
